(19) Europäisches Patentamt
European Patent Office
Office européen des brevets

(11) Veröffentlichungsnummer: **0 274 617 B1**

# (12) EUROPÄISCHE PATENTSCHRIFT

(45) Veröffentlichungstag der Patentschrift: **25.09.91**

(51) Int. Cl.⁵: **A47J 31/057, A47J 31/00**

(21) Anmeldenummer: **87117040.3**

(22) Anmeldetag: **19.11.87**

(54) Kaffee- oder Teemaschine.

(30) Priorität: **22.12.86 DE 3643879**

(43) Veröffentlichungstag der Anmeldung:
**20.07.88 Patentblatt 88/29**

(45) Bekanntmachung des Hinweises auf die
Patenterteilung:
**25.09.91 Patentblatt 91/39**

(84) Benannte Vertragsstaaten:
**AT BE CH DE ES FR GB GR IT LI LU SE**

(56) Entgegenhaltungen:
**DE-A- 2 058 741      DE-A- 2 111 996
FR-A- 471 658       FR-A- 1 079 664
US-A- 2 638 839      US-A- 4 112 830**

(73) Patentinhaber: **Melitta Haushaltsprodukte
GmbH & Co. Kommanditgesellschaft
Ringstrasse 99
W-4950 Minden 1(DE)**

(72) Erfinder: **Häuslein, Reinhard
Lange Wand 26
W-4950 Minden(DE)**

(74) Vertreter: **Loesenbeck, Karl-Otto, Dipl.-Ing. et
al
Jöllenbecker Strasse 164
W-4800 Bielefeld 1(DE)**

## Beschreibung

Die Erfindung betrifft eine Kaffee- oder Teemaschine mit einem Frischwasserbehälter, einem Durchlauferhitzer mit einer Überlaufeinrichtung, einem Filtergefäß zur Aufnahme eines Aromaträgers sowie einem Behälter zur Aufnahme des Filtrates, wobei im Bereich von Überlaufeinrichtung und Filtergefäß eine Vorrichtung zur Erzeugung einer Relativbewegung des im Filtergefäß befindlichen Aromaträgers quer zur vertikalen Durchlaufrichtung des Brühwassers angeordnet ist.

Bei einer bekannten Kaffeemaschine der gattungsgemäßen Art (FR-A-471 658) besteht die Vorrichtung zur Erzeugung der Relativbewegung aus einem vierflügligen, in das Filtergefäß hineinragenden Rührwerk, das über einen Handgriff betätigbar ist. Die damit erzielbare Relativbewegung ist begrenzt, zumal üblicherweise ein derartiges Rührwerk immer nur in einem Drehsinn betätigt wird und sich dann alsbald eine gleichlaufende Bewegung zwischen Aromaträger und Brühwasser einstellt.

Es ist ferner bei einer gattungsgemäß etwas abweichend aufgebauten Kaffeemaschine bekannt (DE-A-2 111 996), an einem durch einen Siebträger in eine Eingabekammer und eine Absaugkammer unterteilten Behälter einen mechanischen Schwingungserzeuger, z. B. mit einer umlaufenden Umwucht, anzubringen. Die mögliche Amplitude für einen derartigen Schwingungserzeuger ist schon im Hinblick auf eine stabile Lagehaltung des Behälters begrenzt. Auch hier kann sich ein Gleichlauf von Aromaträger und Brühwasser einstellen.

Der vorliegenden Erfindung liegt von daher die Aufgabe zugrunde, eine Kaffee- oder Teemaschine der gattungsgemäßen Art mit einfachen Mitteln dahingehend zu verbessern, daß eine bessere und gleichmäßigere Ausnutzung des Aromaträgers - gemahlener Röstkaffee oder Tee- erzielt wird.

Die erfindungsgemäße Lösung besteht darin, daß die Vorrichtung zur Erzeugung der Relativbewegung aus einer mechanischen Rütteleinrichtung besteht, die einen eine Exzenterscheibe und eine Schubstange beinhaltenden Pendelantrieb aufweist, wobei ein beweglich gelagerter Stützring vorgesehen ist, der das Filtergefäß aufnimmt und in dem die Schubstange des Pendelantriebes angreift. Aufgrund dieser konstruktiven Ausgestaltung wird dem Filtergefäß über den aufnehmenden Stützring und den am Stützring mittels der Schubstange angreifenden Pendelantrieb eine Pendelbewegung erteilt.

Eine weitere Ausgestaltung ist in dem Unteranspruch gekennzeichnet.

In den beigefügten Zeichnungen ist ein Ausführungsbeispiel der Erfindung dargestellt.
Es zeigen
Figur 1 eine schematisch dargestellte Ansicht einer Kaffee- oder Teemaschine gemäß der Erfindung,
Figur 2 eine schematisch dargestellte Draufsicht auf die Kaffee- oder Teemaschine gemäß Figur 1.

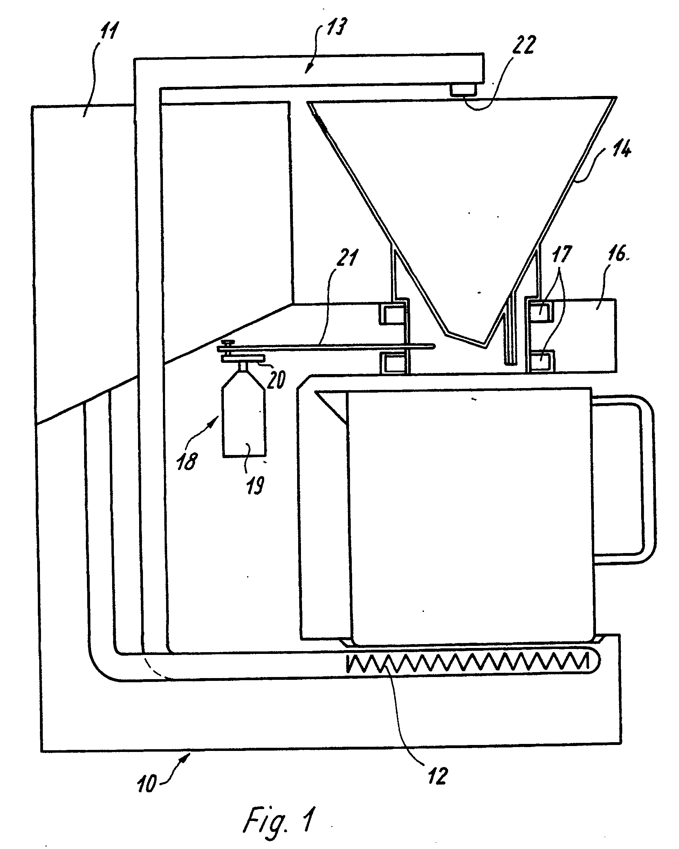

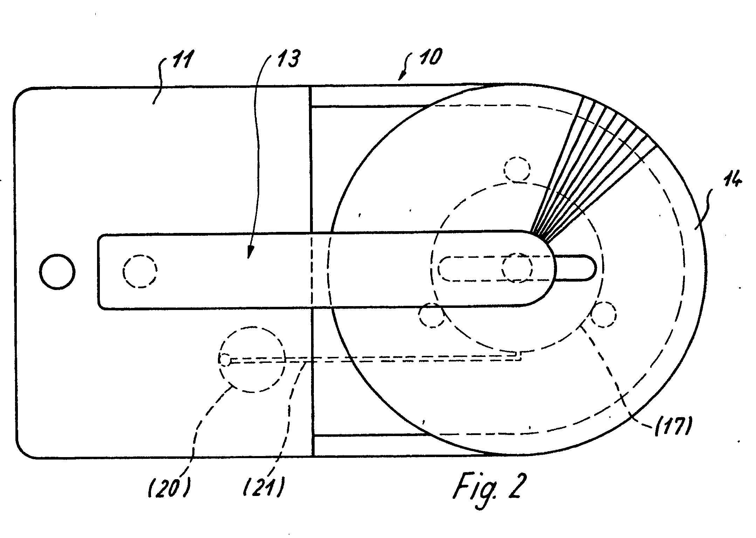

Bei der in den Figuren 1 und 2 gezeigten und insgesamt mit dem Bezugszeichen 10 versehenen Kaffee- oder Teemaschine ist mit dem Bezugszeichen 11 ein Frischwasserbehälter, mit dem Bezugszeichen 12 ein Durchlauferhitzer und mit dem Bezugszeichen 13 eine Überlaufeinrichtung bezeichnet, ein Filtergefäß ist mit dem Bezugszeichen 14 und ein Behälter zur Aufnahme des Filtrates mit dem Bezugszeichen 15 bezeichnet.

Die vorerwähnten Teile sind die charakteristischen Bestandteile einer üblicherweise im Haushaltsbereich verwendeten Kaffee- oder Teemaschine.

In das Filtergefäß 14 wird vor Inbetriebnahme der Kaffee- oder Teemaschine 10 noch ein Filterpapiereinsatz eingebracht, auf dessen Darstellung aus Gründen der Übersichtlichkeit verzichtet worden ist. In diesen Filterpapiereinsatz wird dann ein Aromaträger, beispielsweise gemahlener Röstkaffee oder Tee, eingefüllt.

Das im Frischwasserbehälter 11 befindliche Frischwasser wird durch den Durchlauferhitzer 12 erhitzt und über die Überlaufeinrichtung 13 als Brühwasser in das Filtergefäß 14 gefördert.

Das beim Durchlauf des Brühwassers durch den Aromaträger entstehende Filtrat wird im Behälter 15 gesammelt.

Der Kerngedanke der vorliegenden Erfindung besteht nun darin, eine weitestgehend gleichmäßige Befeuchtung des Aromaträgers durch das Brühwasser herbeizuführen.

Diesem Gedanken wird bei der Kaffee- oder Teemaschine nach den Figuren 1 und 2 dadurch Rechnung getragen, daß das Filtergefäß 14 quer zur vertikalen Durchflußrichtung des Brühwassers beweglich gelagert wird.

Zu diesem Zweck ist das Filtergefäß 14 in einem Tragarm 16 gelagert, und zwar innerhalb eines Stützringes 17, der relativ zum ortsfesten Tragarm 16 über einen Pendelantrieb 18 bestehend aus einem Antriebsmotor 19, einer Exzenterscheibe 20 sowie einer Schubstange 21 antreibbar ist.

Über den Pendelantrieb 18 ist der Stützring 17 und damit das darin gelagerte Filtergefäß 14 quer zur Durchflußrichtung des Brühwassers entsprechend der exzentrischen Anbindung der Schubstange 21 an der Exzenterscheibe 20 in Grenzen in einer Pendelbewegung bewegbar. Diese Beweglichkeit des Filtergefäßes 14 führt dazu, daß das über die Überlaufeinrichtung 13 und deren Auslauföffnung 22 in das Filtergefäß 14 geförderte Brühwasser gleichmäßiger auf den im Filtergefäß 14 befindlichen Aromaträger gefördert werden kann, was wiederum zu der erwünschten, gleichmäßigen Durchfeuchtung des Aromaträgers führt.

## Patentansprüche

1. Kaffee- oder Teemaschine (10) mit einem Frischwasserbehälter (11), einem Durchlauferhitzer (12) mit einer Überlaufeinrichtung (13), einem Filtergefäß (14) zur Aufnahme eines Aromaträgers sowie einem Behälter (15) zur Aufnahme des Filtrates, wobei im Bereich von Überlaufeinrichtung (13) und Filtergefäß (14) eine Vorrichtung (17, 18) zur Erzeugung einer Relativbewegung des im Filtergefäß (14) befindlichen Aromaträgers (27) quer zur vertikalen Durchlaufrichtung des Brühwassers angeordnet ist, dadurch gekennzeichnet, daß die Vorrichtung aus einer mechanischen Rütteleinrichtung besteht, die einen eine Exzenterscheibe (20) und eine Schubstange (21) beinhaltenden Pendelantrieb (18) aufweist, wobei ein beweglich gelagerter Stützring (17) vorgesehen ist, der das Filtergefäß (14) aufnimmt und an dem die Schubstange (21) des Pendelantriebes (18) angreift.

2. Kaffee- oder Teemaschine nach Anspruch 1, dadurch gekennzeichnet, daß der Stützring (17) in einem ortsfesten Tragarm (16) gelagert ist.

## Claims

1. Coffee or tea machine (10) with a fresh water container (11), a throughflow heater (12) with an overflow equipment (13), a filter vessel (14) for the reception of an aroma carrier as well as a container (15) for the reception of the filtrate, wherein a device (17, 18) for the production of a relative movement of the aroma carrier (27), which is disposed in the filter vessel (14), transversely to the vertical passage direction of the brewing water is arranged in the region of the overflow equipment (13) and the filter vessel (14), characterised thereby, that the device consists of a mechanical shaking equipment which displays an eccentric disc (20) and an oscillating drive (18) containing a push rod (21), wherein a support ring (17) is provided, which is borne to be movable and receives the filter vessel (14) and at which the push rod (21) of the oscillating drive (18) engages.

2. Coffee or tea machine according to claim 1, characterised thereby, that the support ring (17) is borne in a fixedly located carrier arm (16).

## Revendications

1. Machine à café ou à thé (10) avec un réservoir d'eau fraîche (11), un réchauffeur à circulation (12) avec un déversoir (13), ou porte-filtre (14) recevant un support d'arôme ainsi qu'un récipient (15) pour recevoir le filtrat, comprenant dans le domaine du dispositif d'écoulement supérieur (13) et du porte-filtre (14) un dispositif (17, 18) produisant un mouvement relatif du support d'arôme (27) se trouvant dans le porte-filtre (14) transversalement à la direction verticale d'écoulement de l'eau bouillante, caractérisée en ce que le dispositif comprend un dispositif de secousse mécanique, qui présente un entraînement pendulaire (18) ayant un disque excentré (20) et une tige de poussée (21), en ayant prévu une bague d'appui (17) logée de manière mobile qui reçoit le porte-filtre (14) et est en prise sur la tige de poussée (21) de l'entraînement pendulaire (18).

2. Machine à café ou à thé selon la revendication 1, caractérisée en ce que l'on loge la bague d'appui (17) dans un bras porteur fixe (16).

Fig. 1

Fig. 2